(19) **Europäisches Patentamt / European Patent Office / Office européen des brevets**

(11) **EP 1 743 498 B1**

(12) **EUROPEAN PATENT SPECIFICATION**

(45) Date of publication and mention
of the grant of the patent:
**27.07.2016 Bulletin 2016/30**

(51) Int Cl.:
***H04W 72/00*** *(2009.01)*

(21) Application number: **05739845.5**

(86) International application number:
**PCT/EP2005/052030**

(22) Date of filing: **03.05.2005**

(87) International publication number:
**WO 2005/109925 (17.11.2005 Gazette 2005/46)**

(54) **SYSTEM, CRNC AND METHOD FOR SELECTING A POINT-TO-POINT OR POINT-TO-MULTIPOINT TRANSMISSION MODE**

SYSTEM, CRNC UND VERFAHREN ZUM WÄHLEN EINES PUNKT-ZU-PUNKT ODER PUNKT-ZU-MEHRPUNKT-ÜBERTRAGUNGSMODUS

SYSTEME, CRNC ET PROCEDE PERMETTANT DE SELECTIONNER UN MODE D'EMISSION POINT A POINT OU POINT A MULTIPOINT

(84) Designated Contracting States:
**AT BE BG CH CY CZ DE DK EE ES FI FR GB GR HU IE IS IT LI LT LU MC NL PL PT RO SE SI SK TR**

(30) Priority: **07.05.2004 SE 0401210**

(43) Date of publication of application:
**17.01.2007 Bulletin 2007/03**

(73) Proprietor: **Telefonaktiebolaget LM Ericsson (publ)**
**164 83 Stockholm (SE)**

(72) Inventors:
• **BERGSTRÖM, Joakim**
**S-114 30 STOCKHOLM (SE)**

• **EDLUND, Peter**
**S-147 33 TUMBA (SE)**
• **SAGNÈ, Jacques**
**F-31310 MONTESQUIEU/ VOLVESTRE (FR)**

(74) Representative: **Rees, Simon John Lewis et al**
**Haseltine Lake LLP**
**Redcliff Quay**
**120 Redcliff Street**
**Bristol BS1 6HU (GB)**

(56) References cited:
**WO-A-2004/002184     WO-A-2004/017580**

Printed by Jouve, 75001 PARIS (FR)

## Description

### FIELD OF THE INVENTION

The present invention relates to wireless telecommunication systems. More particularly, and not by way of limitation, the present invention is directed to a system, CRNC and method for selecting whether to utilize a point-to-point transmission mode or a point-to-multipoint transmission mode in a Universal Mobile Telephone System (UMTS)-based telecommunication system.

### BACKGROUND OF THE INVENTION

Release 6 of the Third Generation Partnership Project (3GPP) defines a Multimedia Broadcast Multicast Service (MBMS). The specification defines two modes of operation, a broadcast mode and a multicast mode. The present invention relates to the multicast mode.

In the multicast mode, two different transmission modes may be utilized by the UMTS Terrestrial Radio Access Network (UTRAN) for media content delivery to interested users: a point-to-multipoint (PTM) mode and a point-to-point (PTP) mode. In the PTM mode, a media stream is broadcast on a common channel received by a number of users. The PTM mode is of primary interest when a large number of users in a given cell wish to receive the same media content. In this case, transmission resources (codes, transmit power, and the like) saved by avoiding duplication of the data stream on different radio bearers may outweigh the transmit power overhead required for common channel transmission. In the PTP mode, on the other hand, user data is delivered to each user individually using a dedicated traffic channel. The PTP mode is of primary interest when only a few users in the cell are interested in the same media content.

The entity in charge of the logical resources of the cells in the UMTS network is known as a Controlling Radio Network Controller (CRNC). The CRNC decides on a *per cell* basis whether PTM or PTP transmission shall be utilized for delivery of the MBMS content. Although the algorithm used in this process is not standardized, a typical implementation would take as an input, the number of User Equipments (UEs) that are present in a given cell and are interested in that service. The algorithm selects PTM transmission whenever a predefined threshold number of UEs is reached. Otherwise, the PTP mode is selected.

The entity in charge of the UE connection in the UMTS network is known as a Serving RNC (SRNC). The SRNC/CRNC decide on a per UE connection basis whether PTM or PTP transmission should apply for delivery of the MBMS content. If the SRNC selects PTP transmission for an identified UE, a dedicated radio bearer is set up towards this UE, which requires that the MBMS data stream being delivered to the UE originate from the SRNC. Conversely, if the SRNC selects PTM transmission, no dedicated resources are established. This means that the UE receives the data stream on common channels originating from the CRNC. It should be noted that depending on whether soft/selective combining techniques are used, the UE may have to simultaneously listen to common channels belonging to different cells. A more detailed description of the UTRAN can be found, e. g., in the document 3GPP TS 25.401 issued by the 3rd Generation Partnership Project.

The UMTS interface between different CRNCs and SRNCs is the *Iur* interface. The current 3GPP specifications do not describe any functional division between different logical entities with regard to PTM/PTP negotiation over the *Iur* interface. Thus, PTM/PTP decision information is not adequately shared between the SRNC and the CRNC. This results in inefficiencies in the network because the PTM/PTP decisions made by the SRNC may have a direct impact on the resource utilization in cells controlled by the CRNC.

WO 2004/017580 discloses a channel type switching method for Multimedia Broadcast and Multicast Service (MBMS) point to point (P-t-P) channel and point to multi point (P-t-M) channel. WO 2004/002184 discloses a system relating to broadcast and/or multicast services in mobile communication networks.

### SUMMARY OF THE INVENTION

The present invention addresses the problem in which a CRNC must decide to apply either a point-to-point (PTP) connection or a point-to-multipoint (PTM) connection and communicate this decision to an involved SRNC. The present invention solves this problem by a functional division between different logical entities with regard to PTM/PTP negotiations over the Iur interface in order to achieve an increased flexibility.

The reader is referred to the appended independent claims. Some preferred features are laid out in the dependent claims.

### BRIEF DESCRIPTION OF THE DRAWINGS

    FIG. 1 shows an example of a PTM/PTP negotiation enabled by the method according to the present invention; and
    FIG. 2 is a simplified block diagram of one embodiment of the system of the present invention.

### DESCRIPTION OF THE INVENTION

In a distributed architecture, two types of algorithms may be utilized for PTM/PTP negotiation over Iur. The first is a CRNC PTM/PTP decision algorithm located in the CRNC, and the second is an SRNC PTM/PTP decision algorithm located in the SRNC. There is one instance of the SRNC PTM/PTP decision algorithm per UE context. The process by which CRNC(s) and the SRNC interact for deciding whether PTM or PTP transmission shall apply for a particular UE connection is referred to herein as PTM/PTP negotiation over lur.

*CRNC PTM/PTP Decision Algorithm*

With regard to the CRNC PTM/PTP decision algorithm, different embodiments are possible. According to one embodiment of the present invention, there is one instance of the CRNC PTM/PTP decision *per cell.* In such a scheme, the CRNC sends PTM/PTP decisions, per cell, to the SRNC.

According to another embodiment of the present invention, there is one instance of the locally coordinated CRNC PTM/PTP decision per *drift UE context.* In this scheme, PTM/PTP decisions are notified per drift UE context to the SRNC. For the particular case of a UE in CELL_DCH state and having an established PTP MBMS RAB in softcombining for two cells in the CRNC, the PTM/PTP decision, which has been received by the SRNC, is therefore valid for all radio links that are part of the UE connection and located in the CRNC. On the other hand, for a UE in CELL_DCH due to a PS_RAB, i.e. non-MBMS service, in softcombining with two radio links in cells under the control of the CRNC, it is not by default required that softcombining shall also be applied for MBMS in the same cells as the radio links for the PS RAB. The algorithm utilized by the CRNC to derive a PTM/PTP decision per drift UE context may receive as inputs, for example, parameters such as the PTM/PTP status, and the congestion status of the cell-part of the connection (UE in CELL_DCH state).

In order to notify the SRNC of the relevant CRNC PTM/PTP decision algorithm state transitions, the CRNC may include PTM/PTP decision information in the following messages over the lur interface: RADIO LINK SETUP RESPONSE, RADIO LINK SETUP FAILURE, RADIO LINK ADDITION RESPONSE, and RADIO LINK ADDITION FAILURE. The PTM/PTP decision information may also be sent in the MBMS CHANNEL TYPE RECONFIGURATION INDICATION message. This message may apply to UEs in states other than CELL_DCH, so it utilizes the connectionless mode of the signaling bearer.

Relevant state transitions within the CRNC PTM/PTP decision algorithm(s) may be sent to the SRNC PTM/PTP decision algorithm, either internally (i.e., when the CRNC is co-located with the SRNC), or through lur-signaling (i.e., when the CRNC is not co-located with the SRNC). It should also be noted that both decision schemes (i.e., PTM/PTP decision per cell or PTM/PTP decision per drift UE context) may be utilized in parallel by the CRNC. The CRNC/SRNC PTM/PTP decision algorithms are defined *per MBMS service* and can be based on various criterions, e.g. based on decisions for other radio links that are combined in the CRNC, based on a required/desired Quality-of-Service, etc. Thus, if the UE receives several MBMS services simultaneously, different instances of the CRNC/SRNC PTM/PTP decision algorithms may run in parallel, both in the CRNC and in the SRNC. Different schemes (per cell or per connection) may be used for different MBMS services in the CRNC. In the SRNC the decision algorithm is applied for coordination functions, e.g. in view of softcombining considerations.

When the SRNC receives notifications of state transitions within the various CRNC PTM/PTP decision algorithms, the SRNC PTM/PTP decision algorithm determines the PTP/PTM decision that is valid for the whole UE connection for all UEs served by the CRNC and in all possible states, in particular CELL_DCH. The SRNC PTM/PTP algorithm may consider parameters such as, for example, the PTM/PTP decision notifications (received either internally or via lur signaling) and the network resources.

*SRNC PTM/PTP Decision Algorithm*

The PTM/PTP algorithm in the SRNC decides whether to utilize PTM or PTP transmission for a particular UE connection. Such a scheme may benefit from receiving feedback from the CRNC since the PTM/PTP decision made by the SRNC may have a direct impact on the resource utilization in cells controlled by the CRNC. By combining information received from the various CRNC(s) involved in the connection, the SRNC then decides whether to utilize the PTM mode or PTP mode. Upon state transitions within the SRNC PTM/PTP decision algorithm, the SRNC may engage required reconfiguration procedures towards the Drift Radio Network Controller(s) (DRNCs).

*Example Decision Process*

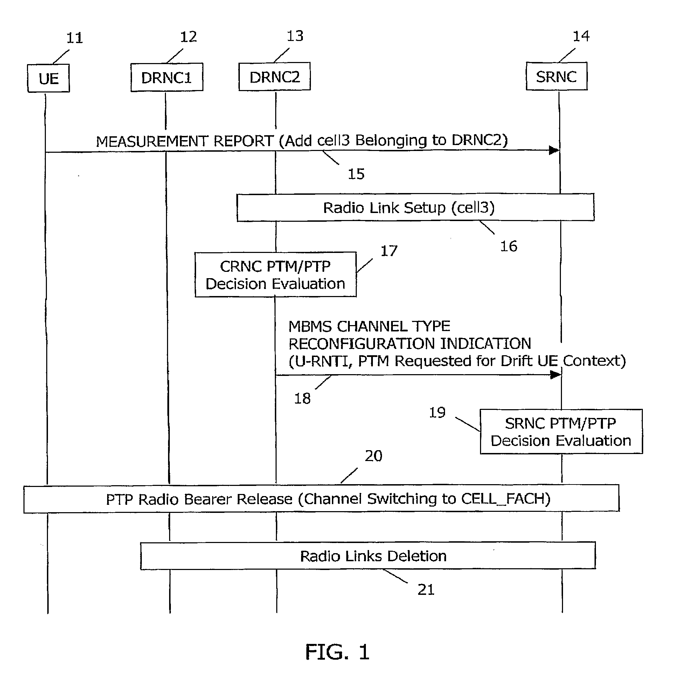

FIG. 1 is a signaling diagram illustrating the flow of messages between the various entities in the UTRAN during a typical PTM/PTP negotiation enabled by a system utilizing a distributed architecture. In the illustrated example, a UE 11 is in state CELL_DCH with a PS Interactive/Background RAB+MBMS bearer PTP established. The UE is in soft handover in cell1 (belonging to DRNC1 12) and in cell2 (belonging to DRNC2 13). The DRNCs negotiate with an SRNC 14. Furthermore, it is assumed that the PTM/PTP status (as decided by the CRNC PTM/PTP decision algorithms) of the cells part of the active set is as follows:

$$\text{cell1} \rightarrow \text{PTP, cell 2} \rightarrow \text{PTM.}$$

The process begins when the UE 11 requires the addition of cell3 (belonging to DRNC2 13) to the active set. Thus the UE sends a MEASUREMENT REPORT 15 to the SRNC 14 requesting to add cell3 belonging to DRNC2. At step 16, a radio link is set up in cell3. In this case, the PTM/PTP status of cell3 is assumed to be PTM. At step 17, the CRNC PTM/PTP decision algorithm is run in DRNC2 *per drift UE context* (in this example). It is furthermore assumed that the outcome of the algorithm is PTM (thus leading to a state transition). DRNC2 then sends an MBMS CHANNEL TYPE RECONFIGURATION INDICATION message 18 over the lur interface to the SRNC notifying the SRNC of the CRNC PTM/PTP decision state transition, and requesting PTM for the drift UE context. This message is sent connectionless. At step 19, the SRNC PTM/PTP decision algorithm is run in the SRNC. It is assumed that the outcome is PTM (thus leading to a state transition).

At step 20, the MBMS PTP radio bearer is released internally within UTRAN, and towards the UE. The UE is moved to CELL_FACH state due to the remaining PS Interactive/Background RAB. Finally, at step 21, DRNC1 12, DRNC2 13, and the SRNC 14 within the UTRAN delete radio links.

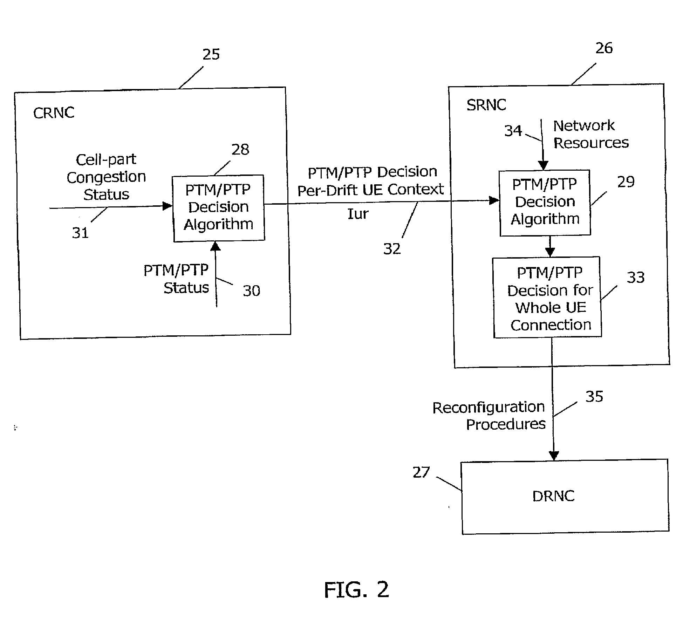

FIG. 2 is a simplified block diagram of one embodiment of the system of the present invention. The illustrated network entities include a CRNC 25, an SRNC 26, and a DRNC 27. The CRNC includes a PTM/PTP decision algorithm 28, and the SRNC includes a PTM/PTP decision algorithm 29. The CRNC PTM/PTP decision algorithm receives as inputs, parameters such as the PTM/PTP status 30, and the congestion status of the cell-part of the connection 31 (UE in CELL_DCH state). In this exemplary embodiment, the CRNC sends PTM/PTP decisions per drift UE context to the SRNC over the lur interface 32.

When the SRNC 26 receives notifications of state transitions within the CRNC PTM/PTP decision algorithm 28, the SRNC PTM/PTP decision algorithm 29 determines the PTM/PTM decision that is valid for the whole UE connection 33. In addition to the CRNC PTM/PTP decision notifications, the SRNC PTM/PTP algorithm may consider parameters such as network resources 34 when determining the valid PTM/PTP decision. The SRNC may also engage required reconfiguration procedures 35 towards the DRNC 27.

The present invention may of course, be carried out in other specific ways than those herein set forth without departing from the essential characteristics of the invention. The present embodiments are, therefore, to be considered in all respects as illustrative and not restrictive and all changes coming within the meaning and equivalency range of the appended claims are intended to be embraced therein.

**Claims**

1. A method in a Controlling Radio Network Controller, CRNC, (25) of a wireless telecommunication system for selecting whether to utilize a point-to-point, PTP, or a point-to-multipoint, PTM, transmission mode to send media content to a user equipment, UE, present in a cell in said wireless telecommunication system, said method comprising:

   making PTM/PTP decisions simultaneously for a plurality of MBMS-services that the user equipment has subscribed to, wherein said decisions are made in parallel per cell or per drift UE context, said decisions based on at least decisions for other radio links that are combined in the CRNC (25) or a required/desired Quality-of-Service;
   notifying a Serving Radio Network Controller, SRNC, (26) of the PTM/PTP decisions.

2. The method according to claim 1, wherein the step of making the PTM/PTP decisions includes considering at least the current PTM/PTP status (30) and congestion status.

3. The method according to claim 1 or 2, further comprising determining by the SRNC (26), whether the PTM/PTP decisions are valid for a given UE connection.

4. The method according to claim 3, wherein said step of determining includes considering at least the PTM/PTP decision received from the CRNC (25) and network resources available.

5. The method according to claim 1, wherein the wireless telecommunication system is a Universal Mobile Telephone System, UMTS, based telecommunication system operating in a multicast mode and wherein the step of notifying the SRNC (26) of the PTM/PTP decisions includes notifying the SRNC (26) of the PTM/PTP decisions over an lur-interface (32) between the CRNC (25) and the SRNC (26).

6. The method according to claim 5, wherein the step of notifying the SRNC (26) of the PTM/PTP decisions over the lur-interface (32) includes sending the PTM/PTP decisions in a message selected from a group consisting of:

   a RADIO LINK SETUP RESPONSE message;
   a RADIO LINK SETUP FAILURE message;
   a RADIO LINK ADDITION RESPONSE message; and
   a RADIO LINK ADDITION FAILURE message.

7. The method according to claim 5, wherein the step of notifying the SRNC (26) of the PTM/PTP decisions over the lur-interface (32) includes utilizing a connectionless mode of a signaling bearer to send the PTM/PTP decisions in a MBMS CHANNEL TYPE RECONFIGURATION INDICATION message, for UEs in states other than CELL_DCH.

**8.** The method according to claim 1, wherein the step of notifying the SRNC (26) of the PTM/PTP decisions includes notifying the SRNC (26) of the PTM/PTP decisions utilizing internal signaling when the CRNC (25) and the SRNC (26) are co-located.

**9.** A Controlling Radio Network Controller, CRNC, (25) in a wireless telecommunication network, said CRNC (25) comprising:

means for making decisions to utilize either a point-to-point, PTP, transmission mode or a point-to-multipoint,PTM, transmission mode to send media content to User Equipments UEs, wherein said decisions are made simultaneously for a plurality of MBMS-services that user equipments have subscribed to, wherein said decisions are made in parallel per cell or per drift UE context, and said decisions are based on at least decisions for other radio links that are combined in the CRNC (25) or a required/desired Quality-of-Service; and
means for notifying a Serving Radio Network Controller, SRNC, (26) of the PTM/PTP decisions.

**10.** The CRNC (25) according to claim 9, wherein the means for making the PTM/PTP decisions is adapted to consider at least the current PTM/PTP status (30) and congestion status.

**11.** A system in a wireless telecommunication network for selecting whether to utilize a point-to-point, PTP, transmission mode or a point-to-multipoint ,PTM, transmission mode, said system comprising:

a Controlling Radio Network Controller, CRNC, (25) according to claim 9; and
a Serving Radio Network Controller , SRNC, (26) adapted to receive the PTM/PTP decisions from the CRNC (25) and to determine whether the PTM/PTP decisions are valid for a given UE connection.

**12.** The system according to claim 11, wherein the CRNC (25) is adapted to notify the SRNC (26) of the PTM/PTP decisions over an lur-interface (32) between the CRNC (25) and the SRNC (26).

**13.** The system according to claim 12, wherein the CRNC (25) is adapted to notify the SRNC (26) of the PTM/PTP decisions over the lur-interface (32) by sending the PTM/PTP decisions in a message selected from a group consisting of:

a RADIO LINK SETUP RESPONSE message;
a RADIO LINK SETUP FAILURE message;
a RADIO LINK ADDITION RESPONSE message; and
a RADIO LINK ADDITION FAILURE message.

**14.** The system according to claim 12, wherein the CRNC (25) is adapted to notify the SRNC (26) of the PTM/PTP decisions over the lur-interface (32) by utilizing a connectionless mode of a signaling bearer to send the PTM/PTP decisions in a MBMS CHANNEL TYPE RECONFIGURATION INDICATION message, for UEs in states other than CELL_DCH.

**15.** The system according to claim 11, wherein the CRNC (25) and the SRNC (26) are co-located, and the CRNC (25) is adapted to notify the SRNC (26) of the PTM/PTP decisions utilizing internal signaling.

**Patentansprüche**

**1.** Verfahren in einem Controlling Radio Network Controller, CRNC, (25) eines drahtlosen Telekommunikationssystems, um auszuwählen, ob ein Punkt-zu-Punkt-, PTP-, oder ein Punkt-zu-Mehrpunkt-, PTM-, Übertragungsmodus verwendet werden soll, um Medieninhalte einem Endgerät, UE, das in einer Zelle des drahtlosen Telekommunikationssystems anwesend ist, zu senden, wobei das Verfahren umfasst:

Treffen von gleichzeitigen PTM/PTP-Entscheidungen für eine Vielzahl von MBMS-Diensten, für die sich das Endgerät angemeldet hat, wobei die Entscheidungen parallel pro Zelle oder pro Drift-UE-Kontext getroffen werden, wobei die Entscheidungen mindestens auf Entscheidungen für andere Funkverbindungen, die in dem CRNC (25) kombiniert werden, oder auf einer erforderlichen/gewünschten Dienstgüte basieren;
Benachrichtigen eines Serving Radio Network Controllers, SRNC, (26) über die PTM/PTP-Entscheidungen.

**2.** Verfahren nach Anspruch 1, wobei der Schritt des Treffens der PTM/PTP-Entscheidungen beinhaltet, mindestens den aktuellen PTM/PTP-Status (30) und Überbelegungsstatus zu berücksichtigen.

**3.** Verfahren nach Anspruch 1 oder 2, weiter umfassend das Bestimmen mittels des SRNC (26), ob die PTM/PTP-Entscheidungen für eine gegebene UE-Verbindung gültig sind.

**4.** Verfahren nach Anspruch 3, wobei der Schritt des Bestimmens ein Berücksichtigen zumindest der PTM/PTP-Entscheidung, die von dem CRNC (25) empfangen wird, und verfügbarer Netzwerkressourcen beinhaltet.

**5.** Verfahren nach Anspruch 1, wobei das drahtlose Telekommunikationssystem ein Universal Mobile Telephone System-, UMTS-, basiertes Telekommunikationssystem ist, das in einem Multicastmodus betrieben wird, und wobei der Schritt des Benachrichtigens des SRNC (26) über die PTM/PTP-Entscheidungen ein Benachrichtigen des SRNC (26) über die PTM/PTP-Entscheidungen über eine Iur-Schnittstelle (32) zwischen dem CRNC (25) und dem SRNC (26) beinhaltet.

**6.** Verfahren nach Anspruch 5, wobei der Schritt des Benachrichtigens des SRNC (26) über die PTM/PTP-Entscheidungen über die Iur-Schnittstelle (32) ein Senden der PTM/PTP-Entscheidungen in einer Nachricht beinhaltet, die ausgewählt ist aus einer Gruppe, die besteht aus:

> einer RADIO LINK SETUP RESPONSE-Nachricht;
> einer RADIO LINK SETUP FAILURE-Nachricht;
> einer RADIO LINK ADDITION RESPONSE-Nachricht; und
> einer RADIO LINK ADDITION FAI LURE-Nachricht.

**7.** Verfahren nach Anspruch 5, wobei der Schritt des Benachrichtigens des SRNC (26) über die PTM/PTP-Entscheidungen über die Iur-Schnittstelle (32) ein Verwenden eines verbindungslosen Modus eines signalisierenden Trägers beinhaltet, um die PTM/PTP-Entscheidungen in einer MBMS CHANNEL TYPE RECONFIGURATION INDICATION-Nachricht, für UEs in anderen Zuständen als CELL DCH, zu senden.

**8.** Verfahren nach Anspruch 1, wobei der Schritt des Benachrichtigens des SRNC (26) über die PTM/PTP-Entscheidungen ein Benachrichtigen des SRNC (26) über die PTM/PTP-Entscheidungen unter Verwendung von internem Signalisieren beinhaltet, falls der CRNC (25) und der SRNC (26) benachbart angeordnet sind.

**9.** Controlling Radio Network Controller, CRNC, (25) in einem drahtlosen Telekommunikationsnetzwerk, wobei der CRNC (25) umfasst:

> Mittel zum Treffen von Entscheidungen, ob entweder ein Punkt-zu-Punkt-, PTP-, oder ein Punkt-zu-Mehrpunkt-, PTM-, Übertragungsmodus verwendet werden soll, um Medieninhalte Endgeräten, UEs, zu senden, wobei die Entscheidungen gleichzeitig getroffen werden für eine Vielzahl von MBMS-Diensten, für die sich die Endgeräte angemeldet haben, wobei die Entscheidungen parallel pro Zelle oder pro Drift-UE-Kontext getroffen werden, wobei die Entscheidungen mindestens auf Entscheidungen für andere Funkverbindungen, die in dem CRNC (25) kombiniert werden, oder auf einer erforderlichen/gewünschten Dienstgüte basieren; und Mittel zum Benachrichtigen eines Serving Radio Network Controller, SRNC, (26) über die PTM/PTP-Entscheidungen.

**10.** CRNC (25) nach Anspruch 9, wobei die Mittel für ein Treffen der PTM/PTP-Entscheidungen eingerichtet sind, mindestens den aktuellen PTM/PMP-Status (30) und Überbelegungsstatus zu berücksichtigen.

**11.** System in einem drahtlosen Telekommunikationsnetzwerk, um auszuwählen, ob ein Punkt-zu-Punkt-, PTP-, oder ein Punkt-zu-Mehrpunkt-, PTM-, Übertragungsmodus verwendet wird, wobei das System umfasst:

> einen Controlling Radio Network Controller, CRNC, (25) nach Anspruch 9; und
> einen Serving Radio Network Controller, SRNC, (26) eingerichtet, die PTM/PTP-Entscheidungen von dem CRNC (25) zu empfangen und zu bestimmen, ob die PTM/PTP-Entscheidungen für eine gegebene UE-Verbindung gültig sind.

**12.** System nach Anspruch 11, wobei der CRNC (25) eingerichtet ist, den SRNC (26) über die PTM/PTP-Entscheidungen über eine Iur-Schnittstelle (32) zwischen dem CRNC (25) und dem SRNC (26) zu benachrichtigen.

**13.** System nach Anspruch 12, wobei der CRNC (25) eingerichtet ist, den SRNC (26) über die PTM/PTP-Entscheidungen über die Iur-Schnittstelle (32) durch Senden der PTM/PTP-Entscheidungen in einer Nachricht zu benachrichtigen, die ausgewählt ist aus einer Gruppe, die besteht aus:

> einer RADIO LINK SETUP RESPONSE-Nachricht;
> einer RADIO LINK SETUP FAILURE-Nachricht;
> einer RADIO LINK ADDITION RESPONSE-Nachricht; und
> einer RADIO LINK ADDITION FAILURE-Nachricht.

**14.** System nach Anspruch 12, wobei der CRNC (25) eingerichtet ist, den SRNC (26) über die PTM/PTP-Entscheidungen über die Iur-Schnittstelle (32) zu benachrichtigen, durch Verwendung eines verbindungslosen Modus eines signalisierenden Trägers, um die PTM/PTP-Entscheidungen in einer MBMS CHANNEL TYPE RECONFIGURATION INDICATION-Nachricht, für UEs in anderen Zuständen als CELL DCH, zu senden.

**15.** System nach Anspruch 11, wobei der CRNC (25) und der SRNC (26) benachbart angeordnet sind und der CRNC (25) eingerichtet ist, den SRNC (26) über die PTM/PTP-Entscheidungen unter Verwendung von internem Signalisieren zu benachrichtigen.

**Revendications**

**1.** Procédé exécuté sur un contrôleur de réseau radio de commande, CRNC pour « *Controlling Radio Network Controller* », (25) d'un système de télécommunication sans fil, afin de choisir d'utiliser un mode d'émission point à point, PTP pour « *Point to Point* », ou point à multipoints, PTM pour « *Point to Multipoint* », pour envoyer du contenu multimédia à un équipement d'utilisateur présent dans une cellule dudit système de télécommunication sans fil, ledit procédé comprenant les étapes consistant à :

prendre simultanément des décisions de mode PTP/PTM pour une pluralité de services MBMS auxquels l'équipement d'utilisateur s'est abonné, lesdites décisions étant prises en parallèle par cellule ou par contexte de dérive d'équipements d'utilisateur, lesdites décisions étant fondées au moins sur des décisions prises pour d'autres liaisons radio qui sont combinées dans le contrôleur CRNC (25) ou sur une qualité de service exigée/souhaitée ;
informer un contrôleur de réseau radio de desserte, SRNC pour « *Serving Radio Network Controller* », (26) des décisions de mode PTP/PTM.

**2.** Procédé selon la revendication 1, dans lequel l'étape de prise des décisions de mode PTP/PTM comprend l'étape consistant à prendre en considération l'état actuel des modes PTP/PTM (30) et l'état de congestion.

**3.** Procédé selon la revendication 1 ou 2, comprenant en outre l'étape consistant à déterminer, par le contrôleur SRNC (26), si les décisions de mode PTP/PTM sont valides pour une connexion donnée d'équipement d'utilisateur.

**4.** Procédé selon la revendication 3, dans lequel ladite étape de détermination comprend l'étape consistant à prendre en considération au moins la décision de mode PTP/PTM reçue du contrôleur CRNC (25) et les ressources disponibles du réseau.

**5.** Procédé selon la revendication 1, dans lequel le système de télécommunication sans fil est un système de télécommunication fondé sur le système universel de télécommunication mobile, UMTS pour « *Universal Mobile Telecommunications System* », fonctionnant dans un mode de diffusion multiple et dans lequel l'étape consistant à informer le contrôleur SRNC (26) des décisions de mode PTP/PTM comprend l'étape consistant à informer le contrôleur SRNC (26) des décisions de mode PTP/PTM via une interface Iur (32) entre le contrôleur CRNC (25) et le contrôleur SRNC (26).

**6.** Procédé selon la revendication 5, dans lequel l'étape consistant à informer le contrôleur SRNC (26) des décisions de mode PTP/PTM via l'interface Iur (32) comprend l'étape consistant à envoyer les décisions de mode PTP/PTM dans un message choisi dans le groupe composé de :

message RADIO LINK SETUP RESPONSE ;
message RADIO LINK SETUP FAILURE ;
message RADIO LINK ADDITION RESPONSE ;
message RADIO LINK ADDITION FAILURE.

**7.** Procédé selon la revendication 5, dans lequel l'étape consistant à informer le contrôleur SRNC (26) des décisions de mode PTP/PTM via l'interface Iur (32) comprend l'étape consistant à utiliser un mode sans connexion d'un support de signalisation pour envoyer les décisions de mode PTP/PTM dans un message MBMS CHANNEL TYPE RECONFIGURATION INDICATION, pour des équipements d'utilisateurs se trouvant dans des états autres que CELL_DCH.

**8.** Procédé selon la revendication 1, dans lequel l'étape consistant à informer le contrôleur SRNC (26) des décisions de mode PTP/PTM comprend l'étape consistant à utiliser une signalisation interne lorsque le contrôleur CRNC (25) et le contrôleur SRNC (26) sont situés au même endroit.

**9.** Contrôleur de réseau radio de commande, CRNC pour *«Controlling Radio Network Controller»*, (25) dans un système de télécommunication sans fil, ledit contrôleur CRNC (25) comprenant :

un moyen destiné à choisir d'utiliser un mode d'émission point à point, PTP pour *«Point to Point* », ou point à multipoints, PTM pour *«Point to Multipoint* », pour envoyer du contenu multimédia à des équipements d'utilisateurs, lesdites décisions étant prises simultanément pour une pluralité de services MBMS auxquels les équipements d'utilisateurs se sont abonnés, lesdites décisions étant prises en parallèle par cellule ou par contexte de dérive d'équipements d'utilisateur et lesdites décisions étant fondées au moins sur des décisions prises pour d'autres liaisons radio qui sont combinées dans le contrôleur CRNC (25) ou sur une qualité de service exigée/souhaitée ;
un moyen destiné à informer un contrôleur de réseau radio de desserte, SRNC pour «*Serving Radio Network Controller* », (26) des décisions de mode PTP/PTM.

**10.** Contrôleur CRNC (25) selon la revendication 9, dans lequel le moyen destiné à prendre les décisions de mode PTP/PTM est conçu pour prendre en considération l'état actuel des modes PTP/PTM (30) et l'état de congestion.

**11.** Système dans un réseau de télécommunication sans fil, destiné à choisir d'utiliser un mode d'émission point à point, PTP pour « *Point to Point* », ou point à multipoints, PTM pour « *Point to Multipoint* », ledit système comprenant :

un contrôleur de réseau radio de commande, CRNC pour *« Controlling Radio Network Controller »,* (25) selon la revendication 9 ; et
un contrôleur de réseau radio de desserte, SRNC pour *« Serving Radio Network Controller »,* (26) conçu pour recevoir les décisions de mode PTP/PTM venant du contrôleur CRNC (25) et pour déterminer si les décisions de mode PTP/PTM sont valides pour une connexion donnée d'équipement d'utilisateur.

**12.** Système selon la revendication 11, dans lequel le contrôleur CRNC (25) est conçu pour informer le contrôleur SRNC (26) des décisions de mode PTP/PTM sur une interface lur (32) entre le contrôleur CRNC (25) et le contrôleur SRNC (26).

**13.** Système selon la revendication 12, dans lequel le contrôleur CRNC (25) est conçu pour informer le contrôleur SRNC (26) des décisions de mode PTP/PTM sur une interface lur (32) en envoyant les décisions de mode PTP/PTM dans un message choisi dans le groupe composé de :

message RADIO LINK SETUP RESPONSE ;
message RADIO LINK SETUP FAILURE ;
message RADIO LINK ADDITION RESPONSE ;
message RADIO LINK ADDITION FAILURE.

**14.** Système selon la revendication 12, dans lequel le contrôleur CRNC (25) est conçu pour informer le contrôleur SRNC (26) des décisions de mode PTP/PTM sur l'interface lur (32) en utilisant un mode sans connexion d'un support de signalisation pour envoyer les décisions de mode PTP/PTM dans un message MBMS CHANNEL TYPE RECONFIGURATION INDICATION, pour des équipements d'utilisateurs se trouvant dans des états autres que CELL_DCH.

**15.** Système selon la revendication 11, dans lequel le contrôleur CRNC (25) et le contrôleur SRNC (26) sont situés au même endroit, et le contrôleur CRNC (25) est conçu pour informer le contrôleur SRNC (26) des décisions de mode PTP/PTM en utilisant une signalisation interne.

FIG. 1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004017580 A

- WO 2004002184 A